# EUROPEAN PATENT APPLICATION

(11) **EP 4 210 426 A1**
(43) Date of publication of application: **12.07.2023**
(21) Application number: 20955754.5
(22) Date of filing: 30.09.2020
(51) Int. Cl.: H04W 76/15

(54) **METHOD AND APPARATUS FOR PERFORMING DATA TRANSMISSION BY MEANS OF DUAL TERMINAL DEVICES**

(71) Applicant: Huawei Technologies Co., Ltd., Shenzhen, Guangdong 518129 (CN)
(72) Inventor: LI, Chenwan, Shenzhen, Guangdong 518129 (CN); LIN, Bo, Shenzhen, Guangdong 518129 (CN); YU, Fang, Shenzhen, Guangdong 518129 (CN); WU, Yizhuang, Shenzhen, Guangdong 518129 (CN); XU, Bin, Shenzhen, Guangdong 518129 (CN)
(74) Representative: Huawei European IPR
(86) International application number: PCT/CN2020/119569
(87) International publication number: WO 2022/067730

(57) **Abstract**

This application provides a method for performing data transmission by two terminal devices and an apparatus, so that only a spectrum resource needs to be occupied or fewer spectrum resources need to be occupied, and fewer spectrum resources are consumed, thereby helping alleviate a strain on spectrum resources. The method includes: A first core network device determines that a first terminal and a second terminal are in a mutual backup relationship. The first core network device sends pairing indication information to a base station, where the pairing indication information indicates that the first terminal and the second terminal are in the mutual backup relationship, so that when determining, based on the pairing indication information, that the first terminal is a primary terminal and the second terminal is a secondary terminal, the base station sends one copy of downlink data to the first terminal and the second terminal, or sends downlink data to the first terminal and sends the downlink data to the second terminal when the first terminal is faulty.

## Description

### TECHNICAL FIELD

This application relates to the field of communication technologies, and in particular, to a method for performing data transmission by two terminal devices and an apparatus.

### BACKGROUND

A business-to-business (business-to-business, B2B) service is a service in which data information is exchanged and transmitted, and a trading activity is carried out between enterprises over a private network or the internet. Because the B2B service is very sensitive to an end-to-end latency and reliability, and few spectrum resources are available to the enterprise, the spectrum resources available to the enterprise are quite precious. B2B services may be mainly classified into three types: remote control (remote Control, RC), control to control (control to control, C2C), and motion control (motion control, MC). An MC service requires that an end-to-end latency be less than or equal to 1 ms and reliability be 99.9999%. That the reliability is 99.9999% may be understood as that total fault time allowed for communication service interruption in one year is about 30 seconds. However, reliability of an existing terminal device is only 99.9% or 99.99%. Therefore, to ensure the reliability of the MC service, the reliability of the terminal device needs to be improved.

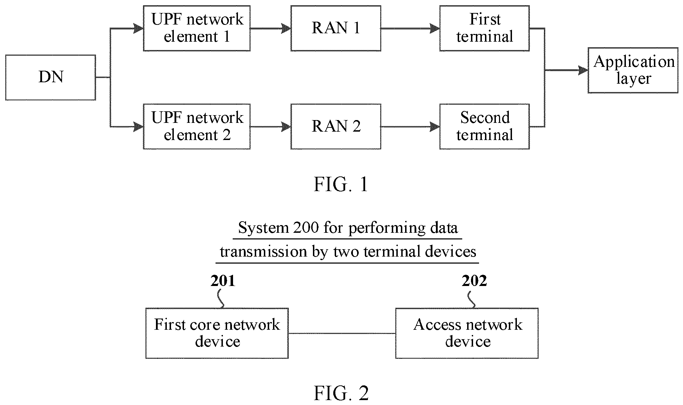

In the conventional technology, to improve the reliability of the terminal device and minimize impact on service continuity of the terminal device, a concept of performing data transmission by two terminal devices is proposed. To be specific, one primary terminal device and one secondary terminal device perform data transmission together, to avoid a case in which data transmission cannot be performed when the primary terminal device is faulty. FIG. 1 is a schematic diagram of a principle of performing data transmission by existing two terminal devices. The terminal device accesses a data network (data network, DN) by establishing a protocol data unit (protocol data unit, PDU) session from the terminal device to a radio access network (radio access network, RAN) to a user plane function (user plane function, UPF) network element. A primary terminal device and a secondary terminal device are connected to different RANs and UPF network elements.

It can be learned that, when the existing two terminal devices perform data transmission, the primary terminal device and the secondary terminal device need to be connected to different RANs and UPF network elements, to establish different PDU sessions from the terminal devices to the RANs to the UPF network elements. Consequently, double spectrum resources are occupied, causing high spectrum resource consumption.

### SUMMARY

Embodiments of this application provide a method for performing data transmission by two terminal devices and an apparatus, to resolve an existing problem that many spectrum resources are consumed when two terminal devices perform data transmission.

According to a first aspect, this application provides a method for performing data transmission by two terminal devices. The method includes the following steps. A first core network device determines that a first terminal and a second terminal are in a mutual backup relationship. The first core network device sends pairing indication information to a base station, where the pairing indication information indicates that the first terminal and the second terminal are in the mutual backup relationship, so that when determining, based on the pairing indication information, that the first terminal is a primary terminal and the second terminal is a secondary terminal, the base station sends one copy of downlink data to the first terminal and the second terminal, or sends downlink data to the first terminal and sends the downlink data to the second terminal when the first terminal is faulty.

According to the foregoing design, after the first core network device determines that the first terminal and the second terminal are in the mutual backup relationship, the first core network device may send, to the base station, the pairing indication information indicating that the first terminal and the second terminal are in the mutual backup relationship, so that when determining, based on the pairing indication information, that the first terminal is the primary terminal and the second terminal is the secondary terminal, the base station can send one copy of downlink data to the first terminal and the second terminal, or can send downlink data to the first terminal and send the downlink data to the second terminal when the first terminal is faulty. Therefore, the first terminal serving as the primary terminal and the second terminal serving as the secondary terminal can jointly perform data transmission with the base station, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

In a possible design, that the first core network device determines that the first terminal and the second terminal are in the mutual backup relationship includes: The first core network device receives registration request messages sent by the first terminal and the second terminal, where the registration request messages are used to request to connect the terminal to a core network; and after receiving the registration request information sent by the first terminal or the second terminal, the first core network device obtains identification information of the second terminal or the first terminal from a second core network device, and determines, based on the identification information of the second terminal or the first terminal, that the first terminal and the second terminal are in the mutual backup relationship; after receiving the registration request information sent by the first terminal or the second terminal, the first core network device obtains identification information of the second terminal or the first terminal from the registration request information sent by the first terminal or the second terminal, and determines, based on the identification information of the second terminal or the second terminal, that the first terminal and the second terminal are in the mutual backup relationship; or after receiving the registration request information sent by the first terminal or the second terminal, the first core network device obtains, from an application function AF network element, identification information of terminals in the mutual backup relationship, and determines, based on the identification information of the terminals in the mutual backup relationship, that the first terminal and the second terminal are in the mutual backup relationship.

According to the foregoing design, after receiving the registration request information of the first terminal or the second terminal, the first core network device determines that the first terminal and the second terminal are in the mutual backup relationship, so that the first core network device authenticates the backup relationship between the first terminal and the second terminal. Further, the base station can authenticate the backup relationship between the first terminal and the second terminal, so that when determining that the first terminal is a primary terminal and the second terminal is a secondary terminal, the base station can send one copy of downlink data to the first terminal and the second terminal, or send downlink data to the first terminal and send the downlink data to the second terminal when the first terminal is faulty. Therefore, the first terminal serving as the primary terminal and the second terminal serving as the secondary terminal can jointly perform data transmission with the base station, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

In the foregoing design, the method further includes: After receiving the registration request information sent by the first terminal or the second terminal, the first core network device receives session establishment request information sent by the first terminal or the second terminal, and sends the session establishment request information to a third core network device, where the session establishment request information is used to request the base station to establish, with a fourth core network device, a protocol data unit PDU session shared by the first terminal and the second terminal.

According to the foregoing design, after receiving the registration request information of the first terminal or the second terminal, the first core network device may receive the session establishment request information of the first terminal or the second terminal, and send the session establishment request information to the third core network device, so that the base station and the fourth core network device establish the PDU session shared by the first terminal and the second terminal. Therefore, when any terminal accesses a network, if the SMF network element determines that the terminal that is in the mutual backup relationship with the terminal has triggered establishment of the PDU session, there may be no need to re-establish a PDU session, and the PDU session established by the terminal that is in the mutual backup relationship with the terminal may be shared. In this way, when the primary terminal is faulty, the secondary terminal can directly use the PDU session shared by the primary terminal and the secondary terminal during data transmission, and there is no need to re-establish a new PDU session. This minimizes impact of a fault of the terminal device on service continuity of the terminal device, and improves reliability of the terminal device.

In a possible design, the method further includes: After the first core network device determines that the first terminal and the second terminal are in the mutual backup relationship, the first core network device sends association indication information to a peer application layer of the terminal, where the association indication information indicates the peer application layer to send downlink data to the first terminal and the second terminal when the peer application layer receives uplink data sent by the first terminal or the second terminal, and the association indication information carries internet protocol IP addresses of the first terminal and the second terminal or IP addresses of the first terminal and the second terminal and an IP address of the peer application layer.

According to the foregoing design, after determining that the first terminal and the second terminal are in the mutual backup relationship, the first core network device may send, to the peer application layer of the terminal, the association indication information indicating the peer application layer to send the downlink data to the first terminal and the second terminal when the peer application layer receives the uplink data sent by the first terminal or the second terminal, so that when receiving the uplink data sent by any terminal, the peer application layer sends the downlink data to the terminal and the terminal that is in the mutual backup relationship with the terminal. Therefore, when the terminal can send the uplink data only after receiving the downlink data or the peer application layer can send the downlink data only after receiving the uplink data, the secondary terminal can also normally perform data transmission. This avoids a case in which data transmission cannot be performed when the primary terminal device is faulty, minimizes impact of a fault of the terminal device on service continuity of the terminal device, and improves reliability of the terminal device.

According to a second aspect, this application further provides a method for performing data transmission by two terminal devices. The method includes: A base station receives pairing indication information sent by a first core network device, where the pairing indication information indicates that a first terminal and a second terminal are in a mutual backup relationship; and when determining, based on the pairing indication information, that the first terminal is a primary terminal and the second terminal is a secondary terminal, the base station sends one copy of downlink data to the first terminal and the second terminal, or sends downlink data to the first terminal and sends the downlink data to the second terminal when the first terminal is faulty.

According to the foregoing design, the base station receives the pairing indication information sent by the first core network device; and when determining, based on the pairing indication information, that the first terminal is the primary terminal and the second terminal is the secondary terminal, the base station can send one copy of downlink data to the first terminal and the second terminal, or can send downlink data to the first terminal and send the downlink data to the second terminal when the first terminal is faulty. Therefore, the first terminal serving as the primary terminal and the second terminal serving as the secondary terminal can jointly perform data transmission with the base station, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

In a possible design, the method further includes: The base station receives session establishment indication information sent by a third core network device, where the session establishment indication information indicates the base station to establish, with a fourth core network device, a protocol data unit PDU session shared by the first terminal and the second terminal; and the base station establishes, with the fourth core network device, based on the session establishment indication information, the PDU session shared by the first terminal and the second terminal.

According to the foregoing design, the base station receives the session establishment indication information that is sent by the third core network device and that indicates the base station to establish, with the fourth core network device, the protocol data unit PDU session shared by the first terminal and the second terminal, and establishes, with the fourth core network device, based on the session establishment indication information, the PDU session shared by the first terminal and the second terminal. Therefore, when any terminal accesses a network, if the SMF network element determines that the terminal that is in the mutual backup relationship with the terminal has triggered establishment of the PDU session, there may be no need to re-establish a PDU session, and the PDU session established by the terminal that is in the mutual backup relationship with the terminal may be shared, so that when the primary terminal is faulty, the secondary terminal can directly use the PDU session shared by the primary terminal and the secondary terminal during data transmission, and there is no need to re-establish a new PDU session. This minimizes impact of a fault of the terminal device on service continuity of the terminal device, and improves reliability of the terminal device.

In a possible design, that the base station sends one copy of downlink data to the first terminal and the second terminal includes: The base station sends first configuration information to the first terminal, and sends a part or all of the first configuration information to the second terminal, where the first configuration information carries a group radio network temporary identifier RNTI or a security key shared by the first terminal and the second terminal.

In a possible design, the security key is any one or more of the following: a key generated by the base station based on an identifier of the first terminal and an identifier of the second terminal; a key generated by the base station based on a random number; or a key generated by the base station for the first terminal and the second terminal; or the security key is a key that is received by the base station and that is generated by the core network device based on an identifier of the first terminal and an identifier of the second terminal.

According to the foregoing design, the base station may send the first configuration information to the first terminal, and send the part or all of the first configuration information to the second terminal, so that the first terminal and the second terminal can normally perform data transmission. In addition, the base station may send one copy of downlink data to the first terminal and the second terminal based on the group RNTI shared by the first terminal and the second terminal. Therefore, the first terminal serving as the primary terminal and the second terminal serving as the secondary terminal can jointly perform data transmission with the gNB. In addition, only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

In a possible design, the method further includes: The base station sends first state indication information to the second terminal, where the first state indication information indicates the terminal to enter a non-working state, and the non-working state is a state in which the terminal does not send uplink data but receives downlink data, a state in which the terminal does not perform data transmission, or a state in which the terminal does not perform service data transmission but performs signaling transmission.

According to the foregoing design, the base station may send, to the second terminal, the first state indication information indicating the terminal to enter the non-working state, so that the first terminal can normally perform data transmission, and the second terminal may not perform data transmission, or the second terminal does not send uplink data but receives, together with the first terminal, one copy of downlink data sent by the base station, or the second terminal does not perform service data transmission but performs signaling transmission. Therefore, the first terminal serving as the primary terminal and the second terminal serving as the secondary terminal can jointly perform data transmission with the base station, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

In a possible design, the method further includes: The base station determines whether the first terminal is faulty, and if yes, the base station sends the first state indication information to the first terminal, and sends second state indication information to the second terminal, where the second state indication information indicates the terminal to enter a working state, and the working state is a state in which the terminal sends uplink data and receives downlink data.

In a possible design, that the base station determines whether the first terminal is faulty includes: The base station obtains fault detection information of the first terminal, where the fault detection information carries at least one of an uplink reference signal, feedback NACK information, uplink data, and fault indication information of the first terminal, and the fault indication information indicates whether the first terminal is faulty. If the fault detection information is not obtained within a preset time period, the base station determines that the first terminal is faulty. If the fault detection information is obtained within a preset time period, the base station determines, based on the fault detection information, whether the first terminal is faulty.

According to the foregoing design, when determining that the first terminal is faulty, the base station sends, to the first terminal, the first state indication information indicating the terminal to enter the non-working state, and sends, to the second terminal, the second state indication information indicating the terminal to enter the working state, so that the second terminal serving as the secondary terminal can replace the first terminal serving as the primary terminal to perform data transmission with the gNB. This avoids a case in which data transmission cannot be performed when the primary terminal device is faulty, minimizes impact of a fault of the terminal device on service continuity of the terminal device, and improves reliability of the terminal device.

According to a third aspect, this application further provides a first core network device. The first core network device has a function of implementing the method in any one of the first aspect or the possible designs of the first aspect. The function may be implemented by hardware, or may be implemented by hardware executing corresponding software. The hardware or the software includes one or more modules corresponding to the foregoing function. For example, the hardware or the software includes a processing unit and a sending unit.

In a possible design, the processing unit is configured to determine that a first terminal and a second terminal are in a mutual backup relationship.

In a possible design, the sending unit is configured to send pairing indication information to a base station, where the pairing indication information indicates that the first terminal and the second terminal are in the mutual backup relationship, so that when determining, based on the pairing indication information, that the first terminal is a primary terminal and the second terminal is a secondary terminal, the base station sends one copy of downlink data to the first terminal and the second terminal, or sends downlink data to the first terminal and sends the downlink data to the second terminal when the first terminal is faulty.

In a possible design, the processing unit may be specifically configured to: receive registration request messages sent by the first terminal and the second terminal, where the registration request messages are used to request to connect the terminal to a core network; and after receiving the registration request information sent by the first terminal or the second terminal, obtain identification information of the second terminal or the first terminal from a second core network device, and determine, based on the identification information of the second terminal or the first terminal, that the first terminal and the second terminal are in the mutual backup relationship; after receiving the registration request information sent by the first terminal or the second terminal, obtain identification information of the second terminal or the first terminal from the registration request information sent by the first terminal or the second terminal, and determine, based on the identification information of the second terminal or the second terminal, that the first terminal and the second terminal are in the mutual backup relationship; or after receiving the registration request information sent by the first terminal or the second terminal, obtain, from an application function AF network element, identification information of terminals in the mutual backup relationship, and determine, based on the identification information of the terminals in the mutual backup relationship, that the first terminal and the second terminal are in the mutual backup relationship.

In a possible design, the processing unit may be further configured to receive session establishment request information sent by the first terminal or the second terminal, and send the session establishment request information to a third core network device, where the session establishment request information is used to request the base station to establish, with a fourth core network device, a protocol data unit PDU session shared by the first terminal and the second terminal.

In a possible design, the sending unit may be further configured to send association indication information to a peer application layer of the terminal, where the association indication information indicates the peer application layer to send downlink data to the first terminal and the second terminal when the peer application layer receives uplink data sent by the first terminal or the second terminal, and the association indication information carries internet protocol IP addresses of the first terminal and the second terminal or IP addresses of the first terminal and the second terminal and an IP address of the peer application layer.

In a possible design, the first core network device may be a chip or an integrated circuit.

In a possible design, the first core network device may include at least one processor and a memory. The memory stores one or more computer programs. When the one or more computer programs stored in the memory are executed by the at least one processor, the first core network device is enabled to perform the method in any one of the first aspect or the possible designs of the first aspect.

According to a fourth aspect, this application further provides a computer-readable storage medium. The computer-readable storage medium includes a computer program. When the computer program is run on a computer, the computer is enabled to perform the method in any one of the first aspect or the possible designs of the first aspect.

According to a fifth aspect, this application further provides a program product. When the program product is run on a computer, the computer is enabled to perform the method in any one of the first aspect or the possible designs of the first aspect.

According to a sixth aspect, this application further provides a chip. The chip may be coupled to a memory in a first core network device, and is configured to invoke a computer program stored in the memory and perform the method in any one of the first aspect or the possible designs of the first aspect.

For beneficial effects of the third aspect to the sixth aspect and the possible designs of the third aspect to the sixth aspect, refer to the foregoing descriptions of the beneficial effects of the method in any one of the first aspect and the possible designs of the first aspect.

According to a seventh aspect, this application further provides a base station. The base station has a function of implementing the method in any one of the second aspect or the possible designs of the second aspect. The function may be implemented by hardware, or may be implemented by hardware executing corresponding software. The hardware or the software includes one or more modules corresponding to the foregoing function. For example, the hardware or the software includes a receiving unit, a sending unit, and a processing unit.

In a possible design, the receiving unit is configured to receive pairing indication information sent by a first core network device, where the pairing indication information indicates that a first terminal and a second terminal are in a mutual backup relationship.

In a possible design, the sending unit is configured to, when determining, based on the pairing indication information, that the first terminal is a primary terminal and the second terminal is a secondary terminal, send one copy of downlink data to the first terminal and the second terminal, or send downlink data to the first terminal and send the downlink data to the second terminal when the first terminal is faulty.

In a possible design, the receiving unit may be further configured to: receive session establishment indication information sent by a third core network device, where the session establishment indication information indicates the base station to establish, with a fourth core network device, a protocol data unit PDU session shared by the first terminal and the second terminal; and establish, with the fourth core network device, based on the session establishment indication information, the PDU session shared by the first terminal and the second terminal.

In a possible design, when sending the copy of downlink data to the first terminal and the second terminal, the sending unit is specifically configured to: send first configuration information to the first terminal, and send a part or all of the first configuration information to the second terminal, where the first configuration information carries a group radio network temporary identifier RNTI or a security key shared by the first terminal and the second terminal.

In a possible design, the security key is any one or more of the following: a key generated by the base station based on an identifier of the first terminal and an identifier of the second terminal; a key generated by the base station based on a random number; a key generated by the base station for the first terminal and the second terminal; or a key that is received by the base station and that is generated by the core network device based on an identifier of the first terminal and an identifier of the second terminal.

In a possible design, the sending unit may be further configured to send first state indication information to the second terminal, where the first state indication information indicates the terminal to enter a non-working state, and the non-working state is a state in which the terminal does not send uplink data but receives downlink data, a state in which the terminal does not perform data transmission, or a state in which the terminal does not perform service data transmission but performs signaling transmission.

In a possible design, the processing unit may be configured to determine whether the first terminal is faulty, and if yes, the processing unit sends the first state indication information to the first terminal, and sends second state indication information to the second terminal, where the second state indication information indicates the terminal to enter a working state, and the working state is a state in which the terminal sends uplink data and receives downlink data.

In a possible design, when determining whether the first terminal is faulty, the processing unit is specifically configured to: obtain fault detection information of the first terminal, where the fault detection information carries at least one of an uplink reference signal, feedback NACK information, uplink data, and fault indication information of the first terminal, and the fault indication information indicates whether the first terminal is faulty. If the fault detection information is not obtained within a preset time period, the processing unit determines that the first terminal is faulty. If the fault detection information is obtained within a preset time period, the processing unit determines, based on the fault detection information, whether the first terminal is faulty.

In a possible design, the base station may be a chip or an integrated circuit.

In a possible design, the base station may include at least one processor and a memory. The memory stores one or more computer programs. When the one or more computer programs stored in the memory are executed by the at least one processor, the base station is enabled to perform the method in any one of the second aspect or the possible designs of the second aspect.

According to an eighth aspect, this application further provides a computer-readable storage medium. The computer-readable storage medium includes a computer program. When the computer program is run on a computer, the computer is enabled to perform the method in any one of the second aspect or the possible designs of the second aspect.

According to a ninth aspect, this application further provides a program product. When the program product is run on a computer, the computer is enabled to perform the method in any one of the second aspect or the possible designs of the second aspect.

According to a tenth aspect, this application further provides a chip. The chip may be coupled to a memory in a terminal, and is configured to invoke a computer program stored in the memory and perform the method in any one of the second aspect or the possible designs of the second aspect.

For beneficial effects of the seventh aspect to the tenth aspect and the possible designs of the seventh aspect to the tenth aspect, refer to the foregoing descriptions of beneficial effects of the method in any one of the second aspect and the possible designs of the second aspect.

According to an eleventh aspect, this application further provides a system for performing data transmission by two terminal devices, where the system for performing data transmission by two terminal devices includes a first core network device unit and a base station. The first core network device is configured to perform the steps performed by the first core network device in the first aspect or the solutions provided in embodiments of this application. The base station is configured to perform the steps performed by the base station in the second aspect or the solutions provided in embodiments of this application.

In a possible design, the system for performing data transmission by two terminal devices may further include another device that interacts with the first core network device or the base station in the solutions provided in embodiments of this application, for example, a first core network device, a second core network device, a third core network device, a fourth core network device, an application function AF network element, a first terminal, or a second terminal. This is not specifically limited in embodiments of this application.

### BRIEF DESCRIPTION OF DRAWINGS

FIG. 1 is a schematic diagram of a principle of performing data transmission by existing two terminal devices;
FIG. 2 is a schematic diagram of an architecture of a system for performing data transmission by two terminal devices to which an embodiment of this application is applicable;
FIG. 3 is a schematic diagram of an architecture of another system for performing data transmission by two terminal devices to which an embodiment of this application is applicable;
FIG. 4 is a schematic diagram of an architecture of another 5G system for performing data transmission by two terminal devices to which an embodiment of this application is applicable;
FIG. 5A and FIG. 5B are a schematic flowchart of a method for performing data transmission by two terminal devices according to an embodiment of this application;
FIG. 6A and FIG. 6B are a schematic flowchart of another method for performing data transmission by two terminal devices according to an embodiment of this application;
FIG. 7 is a schematic diagram of a structure of a first core network device to which an embodiment of this application is applicable;
FIG. 8 is a schematic diagram of a structure of another first core network device to which an embodiment of this application is applicable;
FIG. 9 is a schematic diagram of a structure of a base station to which an embodiment of this application is applicable; and
FIG. 10 is a schematic diagram of a structure of another base station to which an embodiment of this application is applicable.

### DESCRIPTION OF EMBODIMENTS

To make objectives, technical solution, and advantages of embodiments of this application clearer, the following further describes embodiments of this application in detail with reference to the accompanying drawings.

FIG. 2 is a schematic diagram of an architecture of a system for performing data transmission by two terminal devices to which an embodiment of this application is applicable. The system 200 in which the two terminal devices perform data transmission may include a first core network device 201 and an access network device 202.

It should be understood that the system 200 for performing data transmission by two terminal devices provided in this embodiment of this application is applicable to both a low-frequency scenario and a high-frequency scenario. Application scenarios of the system 200 for performing data transmission by two terminal devices provided in this embodiment of this application include but are not limited to a global system of mobile communications (global system of mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, a new radio (new radio, NR) communication system, or the like.

It should be understood that, in this embodiment of this application, the first core network device 201 and the access network device 202 may directly communicate with each other, or may communicate with each other through forwarding by another device. This is not specifically limited in this embodiment of this application.

In this embodiment of this application, the first core network device 201 may include but is not limited to a mobility management network element. When the first core network device 201 is a mobility management network element, in addition to the foregoing functions, the first core network device 201 may be further configured for mobility management in a mobile network, for example, user location update, user network registration, or user handover. In a 5th generation (5th generation, 5G) communication system, a network element or an entity corresponding to a mobility management network element may be an access and mobility management function (access and mobility management function, AMF) network element in a 5G network architecture. Namf is a service-based interface provided by the AMF network element. The AMF network element may communicate with another network function through Namf. In a future communication system such as the 6th generation (the 6th generation, 6G) communication system, the mobility management network element may still be the AMF network element, or the mobility management network element has another name. This is not limited in this embodiment of this application.

In this embodiment of this application, the access network device 202 may include but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmission point (transmitting point, TP), a mobile switching center, or the like. This is not limited in this embodiment of this application. Alternatively, the access network device 202 may be a communication chip having a communication module. In an execution process of the method for performing data transmission by two terminal devices provided in this embodiment of this application, the access network device 202 may be used as a radio access network (radio access network, RAN) base station to provide a wireless network connection for a first terminal and a second terminal. For example, the access network device 202 may be used as an access network base station in a 4G access network such as an evolved universal mobile telecommunications system (universal mobile telecommunications system, UMTS) terrestrial radio access network (evolved UMTS terrestrial radio access network, E-UTRAN), the access network device 202 may be used as an access network base station in a 5G access network such as a 5G RAN, or the access network device 202 may be used as an access network base station in a future wireless communication system.

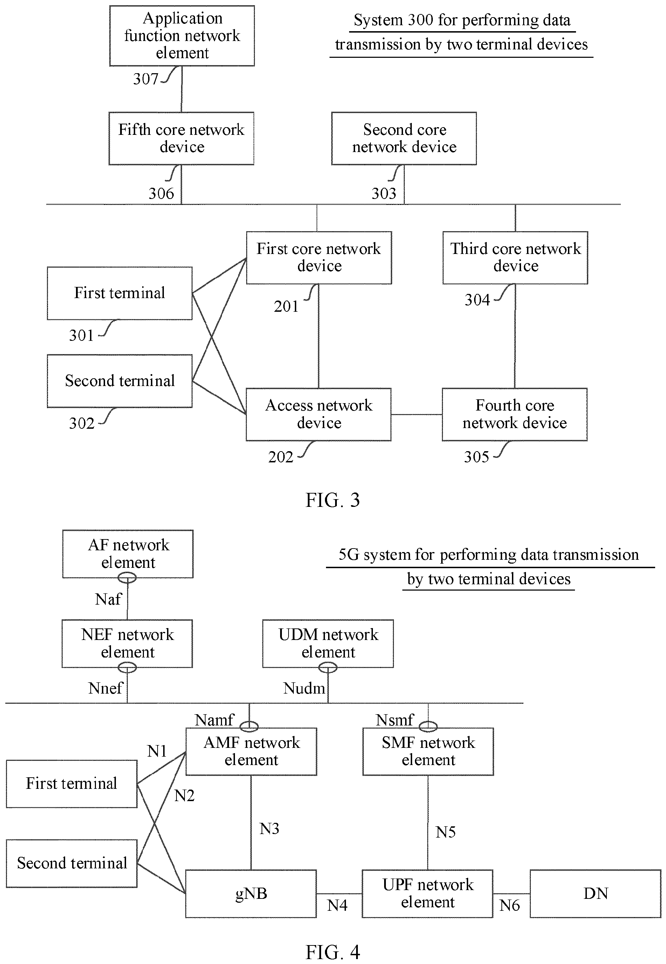

FIG. 3 is a schematic diagram of an architecture of another system for performing data transmission by two terminal devices to which an embodiment of this application is applicable. In addition to the first core network device 201 and the access network device 202 in FIG. 2, the system 300 for performing data transmission by the two terminal devices may further include a first terminal 301, a second terminal 302, a second core network device 303, a third core network device 304, a fourth core network device 305, a fifth core network device 306, and an application function network element 307.

In this embodiment of this application, the first terminal 301 and the second terminal 302 may be devices having wireless transceiver functions, and may be deployed on land, including indoors, outdoors, handheld, or vehiclemounted devices; may be deployed on the water (for example, on a ship); or may be deployed in the air (for example, on an airplane, a balloon, or a satellite). The first terminal 301 and the second terminal 302 can communicate with one or more network devices in one or more communication systems, and accept a network service provided by the access network device 202. For example, the first terminal 301 and the second terminal 302 in this embodiment of this application may be a mobile phone (which is also referred to as a "cellular" phone), a computer having a mobile terminal, or the like. Alternatively, the first terminal 301 and the second terminal 302 may be user equipment (user equipment, UE), a terminal (terminal), a mobile station (mobile station, MS), a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the first terminal 301 and the second terminal 302 may be communication chips having communication modules.

In this embodiment of this application, the second core network device 303 may include but is not limited to a data management network element, and is configured to process a user identifier, access authentication, registration, mobility management, or the like. In the 5G communication system, a network element or an entity corresponding to the data management network element may be a unified data management (unified data management, UDM) network element in a 5G network architecture, where Nudm is a service-based interface provided by the UDM network element, and the UDM network element may communicate with another network function through Nudm. In a future communication system such as the 6G communication system, the data management network element may still be the UDM network element, or the data management network element has another name. This is not limited in this embodiment of this application.

In this embodiment of this application, the third core network device 304 may include but is not limited to a session management network element, and is configured to manage a protocol data unit (protocol data unit, PDU) session of the terminal device. The PDU session is a channel used to transmit a PDU. The terminal device needs to transmit the PDU to a data network (data network, DN) by using the PDU session. The PDU session is established, maintained, deleted, and the like by the session management network element. The session management network element includes session-related functions such as session management (such as session establishment, modification, and release, including maintenance of a tunnel between a user plane network element and an access network), selection and control of a user plane network element, service and session continuity (Service and Session Continuity, SSC) mode selection, and roaming. In the 5G communication system, a network element or an entity corresponding to the session management network element may be a session management function (session management function, SMF) network element in a 5G wireless communication system. In the future communication system such as the 6th generation (the 6th generation, 6G) communication system, the session management network element may still be the SMF network element, or the session management network element may have another name. This is not limited in this embodiment of this application.

In this embodiment of this application, the fourth core network device 305 may include but is not limited to a user plane network element, and is configured to perform packet routing and forwarding, quality of service (quality of service, QoS) processing of user plane data, and the like. In the 5G communication system, a network element or an entity corresponding to the user plane network element may be a user plane function (user plane function, UPF) network element in the 5G wireless communication system. In the future communication system such as the 6th generation (the 6th generation, 6G) communication system, the user plane network element may still be the UPF network element, or the user plane network element has another name. This is not limited in this embodiment of this application.

In this embodiment of this application, the fifth core network device 306 may include but is not limited to a network exposure function network element. A service mainly provided enables a 3rd generation partnership project (3rd generation partnership project, 3GPP) network to securely provide a network service capability for a thirdparty service provider application function network element 307. In the 5G communication system, the network exposure function network element may be a network exposure function (network exposure function, NEF) network element. Nnef is a service-based interface provided by the NEF network element, and the NEF network element may communicate with another network function through Nnef. In the future communication system such as the 6G communication system, the network exposure function network element may still be the NEF network element, or may have another name. This is not limited in this embodiment of this application.

In this embodiment of this application, the application function network element 307 is mainly configured to provide application layer information for a 3GPP network. In the 5G communication system, the application function network element may be an application function (application function, AF) network element. Naf is a service-based interface provided by the AF network element, and the AF network element may communicate with another network function through Naf. In the future communication system such as the 6G communication system, the application function network element may still be the AF network element, or may have another name. This is not limited in this embodiment of this application. For example, the AF network element may include a service capability server (service capability server, SCS) or an application server (application server, AS).

In addition, a 5G communication system is used as an example. FIG. 4 is a schematic diagram of an architecture of a 5G system for performing data transmission by two terminal devices to which an embodiment of this application is applicable. The wireless communication system includes an AMF network element, a first terminal, a second terminal, a gNB, a UPF network element, an SMF network element, a UDM network element, a NEF network element, and an AF network element. In addition, the wireless communication system may further include a location management function (location management function, LMF) network element, an authentication server function (authentication server function, AUSF) network element, a network slice selection function (network slice selection function, NSSF) network element, a network repository function (network exposure function Repository Function, NRF) network element, a policy control function (policy control function, PCF) network element, a unified data repository (unified data repository, UDR) network element, an unstructured data storage function (unstructured data storage function, UDSF), or the like. This is not specifically limited in this embodiment of this application.

An N1 interface in FIG. 4 is a reference point between the first terminal and the AMF network element. An N2 interface is a reference point between the second terminal and the AMF network element. An N3 interface is a reference point between the gNB and the AMF network element, and is configured to send a non-access stratum (non-access stratum, NAS) message, a next generation application protocol (next generation application protocol, NGAP) message, and the like. An N4 interface is a reference point between the gNB and the UPF network element, and is configured to transmit user plane data and the like. An N5 interface is a reference point between the SMF and the UPF, and is configured to transmit information such as tunnel identification information, data buffering indication information, and a downlink data notification message that are connected to the N4. An N6 interface is a reference point between the UPF network element and a DN, and is configured to transmit user plane data, and the like.

In addition, control plane network elements such as the AMF network element, the SMF network element, the UDM network element, the NEF network element, or the AF network element shown in FIG. 4 may also interact with each other by using a service-based interface. For example, a service-based interface provided by the AMF network element may be Namf, a service-based interface provided by the SMF network element may be Nsmf, a service-based interface provided by the UDM network element may be Nudm, a service-based interface provided by the NEF network element may be Nnef, and a service-based interface provided by the AF network element may be Naf. For related descriptions, refer to a diagram of a 5G system architecture (5G system architecture) in the 23501 standard. Details are not described herein.

It may be understood that the foregoing network elements or functions may be network elements in a hardware device, may be software functions running on dedicated hardware, or may be virtualized functions instantiated on a platform (for example, a cloud platform). One or more services may be obtained through division into the network elements or the functions. Further, services that exist independently of network functions may occur. In this application, instances of the functions, instances of services included in the functions, or instances of the services that exist independently of network functions may be referred to as service instances.

Before embodiments of this application are described, some terms in this application are first described, to help a person skilled in the art have a better understanding.

Carrying may mean that information is used to carry information or data, or may mean that the information includes the information.

In embodiments of this application, a mutual backup relationship means that when a terminal is faulty, a terminal can replace the terminal to perform data transmission.

In addition, it should be understood that terms "system" and "network" in embodiments of this application may be used interchangeably. "At least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally represents an "or" relationship between associated objects. The singular expression forms "one", "a", "the", "the foregoing", "this", and "the one" are also intended to include an expression form such as "one or more", unless the opposite is explicitly indicated in the context thereof. In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first terminal and a second terminal are merely used to distinguish between different terminals, but do not indicate that priorities, importance degrees, or the like of the two terminals are different.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following specifically describes, with reference to FIG. 2 to FIG. 4, the method for performing data transmission by two terminal devices provided in embodiments of this application.

It should be understood that the method shown in embodiments of this application is not only applied to the communication systems shown in FIG. 2 to FIG. 4, but may also be applied to another future communication system, for example, a 6G communication system. In the future communication system, a function may remain unchanged, but a name may change.

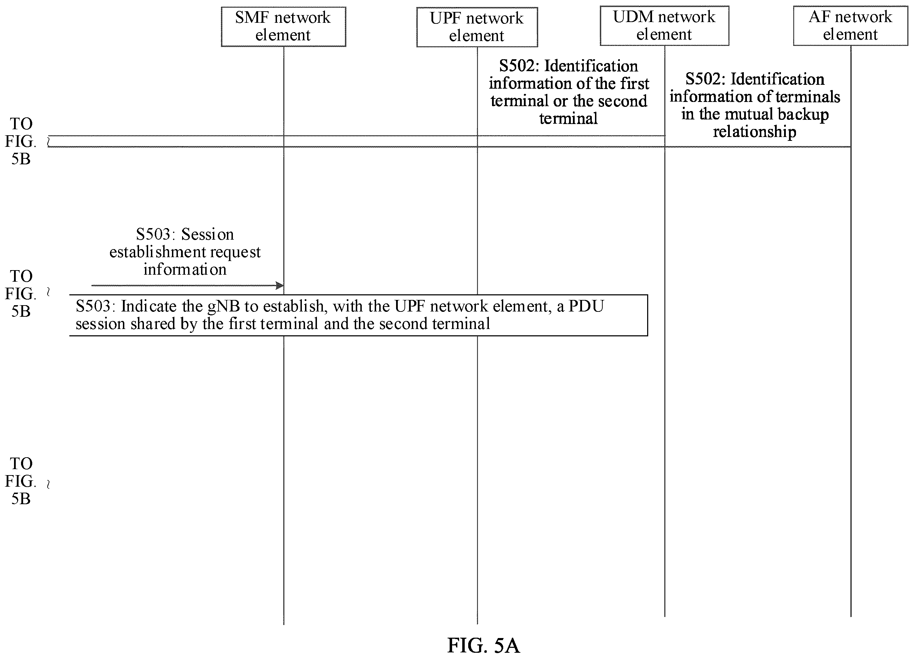

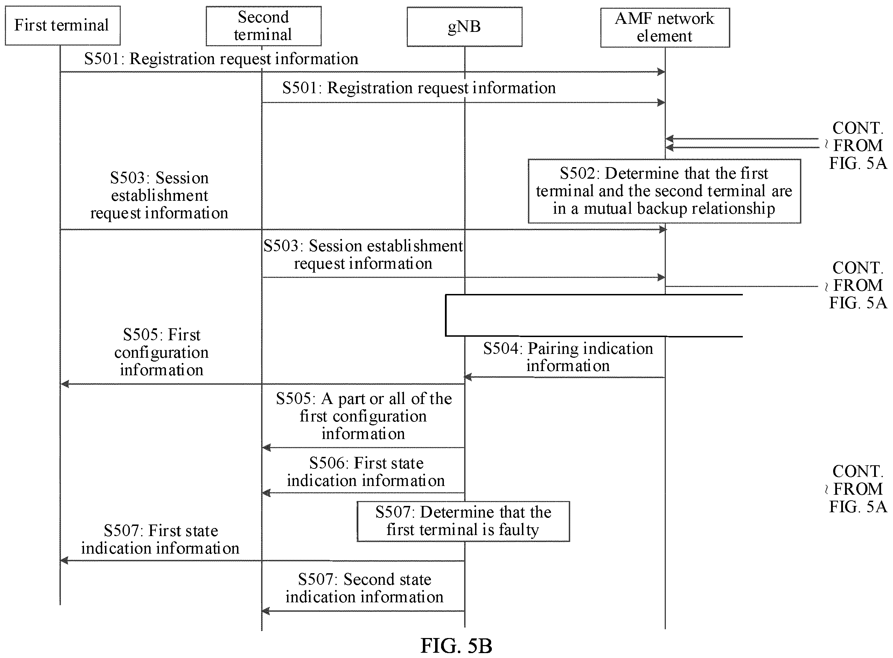

In some embodiments, FIG. 5A and FIG. 5B are a schematic flowchart of a method for performing data transmission by two terminal devices according to an embodiment of this application. For ease of description, in the following descriptions, an example in which a first core network device is an AMF network element, a second core network device is a UDM network element, a third core network device is an SMF network element, a fourth core network device is a UPF network element, and an access network device is a gNB is used for description. A procedure of the method includes the following steps.

S501: A first terminal and a second terminal send registration request information to the AMF network element. Correspondingly, the AMF network element receives the registration request information from the first terminal and the second terminal. The registration request information is used to request to connect the terminal to a core network.

In some embodiments, if the terminal needs to access the core network, the terminal may send, to the AMF network element, the registration request information that carries identification information of the terminal, where a registration request may carry the identification information of the terminal. The identification information of the terminal may be an international mobile equipment identity (international mobile equipment identity, IMEI), a subscription permanent identifier (subscription permanent identifier, SUPI), a subscription concealed identifier (subscription concealed identifier, SUCI) of the terminal, or other information that can identify the terminal. This is not specifically limited in this embodiment of this application.

It should be noted that, in this embodiment of this application, that the first terminal and the second terminal send the registration request information to the AMF network element may mean that the second terminal sends the registration request information to the AMF network element after the first terminal sends the registration request information to the AMF network element, may mean that the first terminal sends the registration request information to the AMF network element after the second terminal sends the registration request information to the AMF network element, or may mean that the first terminal and the second terminal simultaneously send the registration request information to the AMF network element. This is not specifically limited in this embodiment of this application.

S502: The AMF network element determines that the first terminal and the second terminal are in a mutual backup relationship.

In some embodiments, after receiving the registration request information of the first terminal or the second terminal, the AMF network element may obtain the identification information of the second terminal or the first terminal from the UDM network element, and determine, based on the identification information of the second terminal or the first terminal, that the first terminal and the second terminal are in the mutual backup relationship.

For example, after receiving the registration request information of the first terminal, the AMF network element may send subscription request information to the UDM network element. The subscription request information is used to request the UDM network element to return identification information of a terminal that is in the mutual backup relationship with the first terminal, and the subscription request information carries the identification information of the first terminal. Correspondingly, after receiving the subscription request information from the AMF network element, the UDM network element may determine, based on the identification information of the first terminal, that the terminal that is in the mutual backup relationship with the first terminal is the second terminal, and send subscription information to the AMF network element, where the subscription information carries the identification information of the second terminal. Correspondingly, after receiving the subscription information from the UDM network element, the AMF network element may determine, based on the identification information of the second terminal, that the first terminal and the second terminal are in the mutual backup relationship.

In some other embodiments, after receiving the registration request information of the first terminal or the second terminal, the AMF network element may obtain the identification information of the second terminal or the first terminal from the registration request information sent by the first terminal or the second terminal, and determine, based on the identification information of the second terminal or the first terminal, that the first terminal and the second terminal are in the mutual backup relationship.

For example, the registration request information of the first terminal may carry identification information of a terminal that is in the mutual backup relationship with the first terminal, for example, the identification information of the second terminal. The registration request information of the second terminal may carry identification information of a terminal that is in the mutual backup relationship with the second terminal, for example, the identification information of the first terminal. After receiving the registration request information of the first terminal, the AMF network element may obtain the identification information of the second terminal from the registration request information sent by the first terminal, and determine, based on the identification information of the second terminal, that the first terminal and the second terminal are in the mutual backup relationship.

In some other embodiments, after receiving the registration request information of the first terminal or the second terminal, the AMF network element may obtain, from an AF network element, identification information of terminals in the mutual backup relationship, and determine, based on the identification information of the terminals in the mutual backup relationship, that the first terminal and the second terminal are in the mutual backup relationship.

For example, backup information may be preset in the AF network element. The backup information includes the identification information of the terminals in the mutual backup relationship. The identification information of the terminal may be an IMEI, an SUPI, or an SUCI of the terminal, or may be a generic public subscription identifier (generic public subscription identifier, GPSI), or other information that can identify the terminal. This is not specifically limited in this embodiment of this application. The AF network element may send the backup information to the SMF network element. Correspondingly, the SMF network element receives the backup information from the AF network element. If the identification information of the terminal is the GPSI, because the GPSI is an external identifier, the AMF network element cannot identify the GPSI, and therefore cannot determine the terminal corresponding to the identification information. In this case, the SMF network element may send the backup information to the UDM network element. Correspondingly, after receiving the backup information from the SMF network element, the UDM network element translates the identification information of the terminal from the GPSI into the IMEI, the SUPI, or the SUCI of the terminal, or the other information that can identify the terminal, and then the UDM network element sends translated backup information to the AMF network element. If the identification information of the terminal is not the GPSI, the SMF network element may directly send the backup information to the AMF network element. After receiving the registration request information of the first terminal, the AMF network element may determine, based on the backup information from the SMF network element or the UDM network element, that the first terminal and the second terminal are in the mutual backup relationship.

In some other embodiments, after receiving the registration request information of the first terminal or the second terminal, the AMF network element may obtain, from the SMF network element, identification information of terminals that are in the mutual backup relationship or support a same service, and determine, based on the identification information of the terminals that are in the mutual backup relationship or support the same service, that the first terminal and the second terminal are in the mutual backup relationship.

For example, backup information or service information may be preset in the SMF network element. The backup information carries the identification information of the terminals in the mutual backup relationship, and the service information carries the identification information of the terminals that support the same service. The identification information of the terminal may be an IMEI, an SUPI, an SUCI, or a GPSI of the terminal, or other information that can identify the terminal. This is not specifically limited in this embodiment of this application. If the identification information of the terminal is the GPSI, the SMF network element may send the backup information to the UDM network element. Correspondingly, after receiving the backup information from the SMF network element, the UDM network element translates the identification information of the terminal from the GPSI into the IMEI, the SUPI, or the SUCI of the terminal, or the other information that can identify the terminal, and then the UDM network element sends translated backup information to the AMF network element. If the identification information of the terminal is not the GPSI, the SMF network element may directly send the backup information to the AMF network element. After receiving the registration request information of the first terminal, the AMF network element may determine, based on the backup information from the SMF network element or the UDM network element, that the first terminal and the second terminal are in the mutual backup relationship.

For example, backup information or service information may be preset in the SMF network element. The backup information carries the identification information of the terminals in the mutual backup relationship, and the service information carries the identification information of the terminals that support the same service. The identification information of the terminal may be an IMEI, an SUPI, an SUCI, or a GPSI of the terminal, or other information that can identify the terminal. This is not specifically limited in this embodiment of this application. If the identification information of the terminal is identification information that cannot be identified by the AMF network element or the gNB, for example, the GPSI, the identification information of the terminal is translated or mapped into identification information that can be identified by the AMF network element or the gNB, for example, an AMF UE NGAP ID or a RAN UE NGAP ID, and then translated or mapped backup information is sent to the AMF network element. After receiving the registration request information of the first terminal, the AMF network element may determine, based on the backup information from the SMF network element, that the first terminal and the second terminal are in the mutual backup relationship.

In this embodiment of this application, after receiving the registration request information of the first terminal or the second terminal, the AMF network element determines that the first terminal and the second terminal are in the mutual backup relationship, so that the AMF network element authenticates the backup relationship between the first terminal and the second terminal. Further, the gNB can authenticate the backup relationship between the first terminal and the second terminal, so that when determining that the first terminal is a primary terminal and the second terminal is a secondary terminal, the gNB can send one copy of downlink data to the first terminal and the second terminal, or send downlink data to the first terminal and send the downlink data to the second terminal when the first terminal is faulty. Therefore, the first terminal serving as the primary terminal and the second terminal serving as the secondary terminal can jointly perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

S503: The first terminal or the second terminal sends session establishment request information to the AMF network element. Correspondingly, the AMF network element receives the session establishment request information from the first terminal or the second terminal, and sends the session establishment request information to the SMF network element. The session establishment request information is used to request the SMF network element to establish a PDU session shared by the first terminal and the second terminal.

In some embodiments, the AMF network element receives the session establishment request information from the first terminal, and sends the session establishment request information to the SMF network element. The session establishment request information is used to request the SMF network element to establish the PDU session shared by the first terminal and the terminal that is in the mutual backup relationship with the first terminal. Specifically, the session establishment request information may carry session establishment indication information, and the session establishment indication information indicates the gNB and the UPF network element to establish the PDU session shared by the first terminal and the terminal that is in the mutual backup relationship with the first terminal. An establishment process is as follows: The SMF network element sends CN Tunnel Info (UPF network element address information) and the session establishment indication information to the AMF network element and the gNB. The gNB sends AN Tunnel Info (gNB address information) to the AMF network element, and the AMF network element forwards the AN Tunnel Info to the SMF network element. Then, the PDU session shared by the first terminal between the gNB and the UPF network element, and the terminal that is in the mutual backup relationship with the first terminal is established.

In some other embodiments, after the AMF network element receives the registration request information of the first terminal, the first terminal may send the session establishment request information to the AMF network element. Correspondingly, the AMF network element receives the session establishment request information from the first terminal, and sends the session establishment request information to the SMF network element. The session establishment request information is used to request the SMF network element to establish a PDU session exclusive to the first terminal. After the AMF network element receives the registration request information of the second terminal, the second terminal may send the session establishment request information to the AMF network element. Correspondingly, the AMF network element receives the session establishment request information from the second terminal, and sends the session establishment request information to the SMF network element. The session establishment request information is used to request the SMF network element to establish a PDU session exclusive to the second terminal. After the SMF network element receives the session establishment request information of the first terminal and the second terminal, if the SMF network element or the UPF network element obtains session-related subscription information according to the method described in step 502, where the session-related subscription information includes the identification information of the terminals in the mutual backup relationship, for example, the identification information of the first terminal and the second terminal, the SMF network element or the UPF network element determines that either of the PDU sessions may be selected to send one copy of data to the gNB, for example, the PDU session of the first terminal may be selected to send one copy of data to the gNB. When the gNB determines that the first terminal and the second terminal are in the mutual backup relationship, the gNB may send one copy of data to either of the first terminal and the second terminal or the first terminal and the second terminal. If the gNB determines that the first terminal is faulty, the gNB may notify the core network device to change the PDU session. For example, one copy of data may be sent to the gNB by using the PDU session of the second terminal.

In some other embodiments, after the AMF network element receives the registration request information of the first terminal, the first terminal may send the session establishment request information to the AMF network element. Correspondingly, the AMF network element receives the session establishment request information from the first terminal, and sends the session establishment request information to the SMF network element. The session establishment request information is used to request the SMF network element to establish a PDU session exclusive to the first terminal. After the AMF network element receives the registration request information of the second terminal, the second terminal may send the session establishment request information to the AMF network element. Correspondingly, the AMF network element receives the session establishment request information from the second terminal, and sends the session establishment request information to the SMF network element. The session establishment request information is used to request the SMF network element to establish a PDU session exclusive to the second terminal. After the SMF network element receives the session establishment request information of the first terminal and the second terminal, if the SMF network element or the UPF network element does not obtain session-related subscription information, where the session-related subscription information includes the identification information of the terminals in the mutual backup relationship, for example, the identification information of the first terminal and the second terminal, the SMF network element or the UPF network element separately sends two copies of data to the gNB by using the PDU sessions of the first terminal and the second terminal. After receiving pairing indication information sent by the AMF network element, the gNB determines that the first terminal and the second terminal are in the mutual backup relationship, so that the gNB sends only one copy of data to the first terminal and the second terminal.

It should be noted that in this embodiment of this application, after the first terminal or the second terminal sends the session establishment request information to the AMF network element, the AMF network element sends the session establishment request information to the SMF network element. The AMF network element may send the session establishment request information to the SMF network element before determining that the first terminal and the second terminal are in the mutual backup relationship, or the AMF network element may send the session establishment request information to the SMF network element after determining that the first terminal and the second terminal are in the mutual backup relationship. This is not specifically limited in this embodiment of this application.

It should be noted that in this embodiment of this application, step 503 is an optional step. The first terminal may send, to the AMF network element, the session establishment request information used to request to establish the PDU session exclusive to the first terminal, and the second terminal may send, to the AMF network element, the session establishment request information used to request to establish the PDU session exclusive to the second terminal. This is not specifically limited in this embodiment of this application.

In this embodiment of this application, after receiving the registration request information of the first terminal or the second terminal, the AMF network element may receive the session establishment request information of the first terminal or the second terminal, and send the session establishment request information to the SMF network element, so that the SMF network element sends, to the gNB, the session establishment indication information indicating the gNB and the UPF network element to establish the PDU session shared by the first terminal and the second terminal. Therefore, when any terminal accesses a network, if the SMF network element determines that a terminal that is in the mutual backup relationship with the terminal has triggered establishment of a PDU session, there may be no need to re-establish a PDU session, and a PDU session established by the terminal that is in the mutual backup relationship with the terminal may be shared. In this way, when the primary terminal is faulty, the secondary terminal can directly use the PDU session shared by the primary terminal and the secondary terminal during data transmission, and there is no need to re-establish a new PDU session. This minimizes impact of a fault of the terminal device on service continuity of the terminal device, and improves reliability of the terminal device.

S504: The AMF network element sends the pairing indication information to the gNB. Correspondingly, the gNB receives the pairing indication information from the AMF network element. The pairing indication information indicates that the first terminal and the second terminal are in the mutual backup relationship.

In some embodiments, after determining that the first terminal and the second terminal are in the mutual backup relationship, the AMF network element may send, to the gNB, the pairing indication information indicating that the first terminal and the second terminal are in the mutual backup relationship. The pairing indication information carries the identification information of the first terminal and the second terminal, and the identification information is identification information that can be identified by the gNB, for example, an AMF UE NGAP ID or a RAN UE NGAP ID. Signaling for sending the pairing indication information may be NG-AP signaling, such as DOWNLINK NAS TRANSPORT, INITIAL CONTEXT SETUP REQUEST, or UE CONTEXT MODIFICATION REQUEST.

In this embodiment of this application, after determining that the first terminal and the second terminal are in the mutual backup relationship, the AMF network element may send, to the gNB, the pairing indication information indicating that the first terminal and the second terminal are in the mutual backup relationship, so that the gNB authenticates the backup relationship between the first terminal and the second terminal, and when determining that the first terminal is a primary terminal and the second terminal is a secondary terminal, the gNB can send one copy of downlink data to the first terminal and the second terminal, or send downlink data to the first terminal and send the downlink data to the second terminal when the first terminal is faulty. Therefore, the first terminal serving as the primary terminal and the second terminal serving as the secondary terminal can jointly perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources. In some other embodiments, after the AMF network element determines that the first terminal and the second terminal are in the mutual backup relationship, the AMF network element may directly send association indication information to a peer application layer of the terminal, or may send the association indication information to the peer application layer by using the SMF network element or the UPF network element. This is not specifically limited in this embodiment of this application. Correspondingly, the peer application layer receives the association indication information from the AMF network element, the SMF network element, or the UPF network element. The peer application layer of the terminal is an application layer corresponding to a destination internet protocol (internet protocol, IP) address of uplink data sent by the terminal. After the terminal sends the uplink data to the gNB, the gNB needs to send the uplink data to the peer application layer. The association indication information indicates the peer application layer to send downlink data to the first terminal and the second terminal when the peer application layer receives the uplink data sent by the first terminal or the second terminal. The association indication information carries IP addresses of the first terminal and the second terminal or IP addresses of the first terminal and the second terminal and an IP address of the peer application layer.

It should be noted that, in this embodiment of this application, that the AMF network element sends the association indication information to the peer application layer may be that the AMF network element sends the association indication information to the peer application layer before the AMF network element sends the pairing indication information to the gNB, or may be that the AMF network element sends the association indication information to the peer application layer after the AMF network element sends the pairing indication information to the gNB. This is not specifically limited in this embodiment of this application.

In this embodiment of this application, after determining that the first terminal and the second terminal are in the mutual backup relationship, the AMF network element may send, to the peer application layer, the association indication information indicating the peer application layer to send the downlink data to the first terminal and the second terminal when the peer application layer receives the uplink data sent by the first terminal or the second terminal, so that when receiving the uplink data sent by any terminal, the peer application layer sends the downlink data to the terminal and the terminal that is in the mutual backup relationship with the terminal. Therefore, when the terminal can send the uplink data only after receiving the downlink data or the peer application layer can send the downlink data only after receiving the uplink data, the secondary terminal can also normally perform data transmission. This avoids a case in which data transmission cannot be performed when the primary terminal device is faulty, minimizes impact of a fault of the terminal device on service continuity of the terminal device, and improves reliability of the terminal device.

S505: When determining, based on the pairing indication information, that the first terminal is a primary terminal and the second terminal is a secondary terminal, the gNB sends first configuration information to the first terminal, and sends a part or all of the first configuration information to the second terminal. Correspondingly, the first terminal receives the first configuration information from the gNB, and the second terminal receives the part or all of the first configuration information from the gNB. The first configuration information carries a group radio network temporary identifier RNTI or a security key shared by the first terminal and the second terminal.

In some embodiments, after receiving, from the AMF network element, the pairing indication information indicating that the first terminal and the second terminal are in the mutual backup relationship, the gNB may determine the primary terminal and the secondary terminal in the terminals in the mutual backup relationship. When determining that the first terminal is the primary terminal and the second terminal is the secondary terminal, the gNB may send the first configuration information to the first terminal, and send the part or all of the first configuration information to the second terminal. The first configuration information carries a group radio network temporary identifier (radio network temporary identity, RNTI), a security key, a security algorithm, a physical layer configuration, or the like shared by the first terminal and the second terminal. The group RNTI is used to enable the gNB to send one copy of downlink data to the first terminal and the second terminal based on the group RNTI shared by the first terminal and the second terminal. The security key may be a key generated by the gNB based on the identifier of the first terminal and the identifier of the second terminal, a key generated by the gNB based on a random number, keys generated by the gNB separately for the first terminal and the second terminal, or a key that is received by the gNB and that is generated by the core network device based on the identifier of the first terminal and the identifier of the second terminal. This is not specifically limited in this embodiment of this application. Because the first terminal and the second terminal can share a part of or all configurations, when the gNB sends data to the first terminal, the second terminal may also receive the data from the gNB. In addition, as the backup terminal, the second terminal may not provide an uplink feedback for the downlink data, and support discontinuous data delivery to an upper layer.

In some other embodiments, after the security keys of the first terminal and the second terminal are activated, the gNB may send the security key of the first terminal to the second terminal by using a radio resource control (radio resource control, RRC) protocol message, so that the second terminal can parse, by using the security key of the first terminal, data sent by the gNB to the first terminal. In addition, the gNB may send the identification information of the first terminal, for example, a cell radio network temporary identifier (cell-radio network temporary identifier, C-RNTI), to the second terminal. In this case, the second terminal stores both the C-RNTI of the first terminal and a C-RNTI of the second terminal, so that the second terminal can receive, based on the C-RNTI of the first terminal, the data sent by the gNB to the first terminal.

In this embodiment of this application, when determining that the first terminal is the primary terminal and the second terminal is the secondary terminal, the gNB may send the first configuration information to the first terminal, and send the part or all of the first configuration information to the second terminal, so that the first terminal and the second terminal can normally perform data transmission. In addition, the gNB may send one copy of downlink data to the first terminal and the second terminal based on the group RNTI shared by the first terminal and the second terminal. Therefore, the first terminal serving as the primary terminal and the second terminal serving as the secondary terminal can jointly perform data transmission with the gNB. In addition, only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

S506: The gNB sends first state indication information to the second terminal. Correspondingly, the second terminal receives the first state indication information from the gNB. The first state indication information indicates the terminal to enter a non-working state, where the non-working state is a state in which the terminal does not send uplink data but receives downlink data, a state in which the terminal does not perform data transmission, or a state in which the terminal does not perform service data transmission but performs signaling transmission and transmits a media access control control element (medium access control control element, MAC CE).

In some embodiments, after sending the first configuration information to the first terminal and sending the part or all of the first configuration information to the second terminal, the gNB may send, to the second terminal, the first state indication information indicating the terminal to enter the non-working state. The non-working state is a state in which the terminal does not send uplink data but receives downlink data, a state in which the terminal does not perform data transmission, or a state in which the terminal does not perform service data transmission but performs signaling transmission and transmits a MAC CE. For example, when the terminal enters the non-working state, the terminal may not receive uplink and downlink service data but receive control information such as uplink and downlink signaling and a MAC CE, or the terminal may receive downlink data and provide a feedback, or may receive downlink data without providing a feedback. If the terminal provides a feedback, the gNB may determine, based on feedback information, that a packet data convergence protocol (packet data convergence protocol, PDCP) service data unit (service data unit, SDU) or a complete application layer data packet has been successfully sent to either of the first terminal and the second terminal, and the gNB does not need to continue to repeatedly send data to ensure that each terminal receives the data. The first state indication information may be included in downlink control information (downlink control information, DCI) or a MAC CE, or may be included in an RRC message. This is not specifically limited in this embodiment of this application.

In this embodiment of this application, the gNB may send, to the second terminal, the first state indication information indicating the terminal to enter the non-working state, so that the first terminal can normally perform data transmission, and the second terminal may not perform data transmission, or the second terminal does not send uplink data but receives, together with the first terminal, one copy of downlink data sent by the gNB. Therefore, the first terminal serving as the primary terminal and the second terminal serving as the secondary terminal can jointly perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

S507: The gNB determines whether the first terminal is faulty. If yes, the gNB sends the first state indication information to the first terminal, and sends second state indication information to the second terminal. Correspondingly, the first terminal receives the first state indication information from the gNB, and the second terminal receives the second state indication information from the gNB. The second state indication information indicates the terminal to enter a working state, and the working state is a state in which the terminal sends uplink data and receives downlink data.

In some embodiments, after sending, to the second terminal, the first state indication information indicating the terminal to enter the non-working state, the gNB may determine whether the first terminal is faulty. If yes, the gNB sends the first state indication information to the first terminal, and sends, to the second terminal, the second state indication information indicating the terminal to enter the working state. The working state is a state in which the terminal sends uplink data and receives downlink data. The second state indication information may be sent by using DCI or a MAC CE, or may be sent by using an RRC message, for example, an RRC reconfiguration message. This is not specifically limited in this embodiment of this application.

It should be noted that, after sending, to the second terminal, the first state indication information indicating the terminal to enter the non-working state, the gNB may also send the first state indication information to the first terminal when determining that a radio link of the first terminal is faulty or that the radio link of the first terminal is poor, and send, to the second terminal, the second state indication information indicating the terminal to enter the working state. This is not specifically limited in this embodiment of this application.

For example, the gNB may obtain fault detection information of the first terminal. If the gNB does not obtain the fault detection information within a preset time period, the gNB determines that the first terminal is faulty or the radio link of the first terminal is faulty and the first terminal needs to be taken over by the second terminal. If the gNB obtains the fault detection information within a preset time period, the gNB determines, based on the fault detection information of the first terminal, whether the first terminal is faulty. The fault detection information may carry at least one of an uplink reference signal, feedback NACK information (or no received ACK information), uplink data, and fault indication information of the first terminal. The fault indication information indicates whether the first terminal is faulty. Specifically, the second terminal may determine, based on a heartbeat packet between the first terminal and the second terminal or feedback NACK information of the gNB, whether the first terminal is faulty, and send the fault indication information to the gNB. This is not specifically limited in this embodiment of this application. If the fault detection information carries the uplink reference signal of the first terminal, the gNB may perform uplink measurement based on the uplink reference signal of the first terminal. If a measurement value is less than a preset threshold for a period of time, it may be determined that the first terminal is faulty or the radio link of the first terminal is faulty. If the fault detection information carries the feedback information of the first terminal, and if the base station does not receive, within a preset time period, the feedback information of the first terminal for the downlink data, it may be determined that the first terminal is faulty or that the radio link of the first terminal is faulty. In this embodiment of this application, when determining that the first terminal is faulty, the gNB sends, to the first terminal, the first state indication information indicating the terminal to enter the non-working state, and sends, to the second terminal, the second state indication information indicating the terminal to enter the working state, so that the second terminal serving as the secondary terminal can replace the first terminal serving as the primary terminal to perform data transmission with the gNB. This avoids a case in which data transmission cannot be performed when the primary terminal device is faulty, minimizes impact of a fault of the terminal device on service continuity of the terminal device, and improves reliability of the terminal device.

In this embodiment of this application, after determining that the first terminal and the second terminal are in the mutual backup relationship, the AMF network element may send, to the gNB, the pairing indication information indicating that the first terminal and the second terminal are in the mutual backup relationship, so that when determining, based on the pairing indication information, that the first terminal is the primary terminal and the second terminal is the secondary terminal, the gNB can send one copy of downlink data to the first terminal and the second terminal. Therefore, the first terminal serving as the primary terminal and the second terminal serving as the secondary terminal can jointly perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

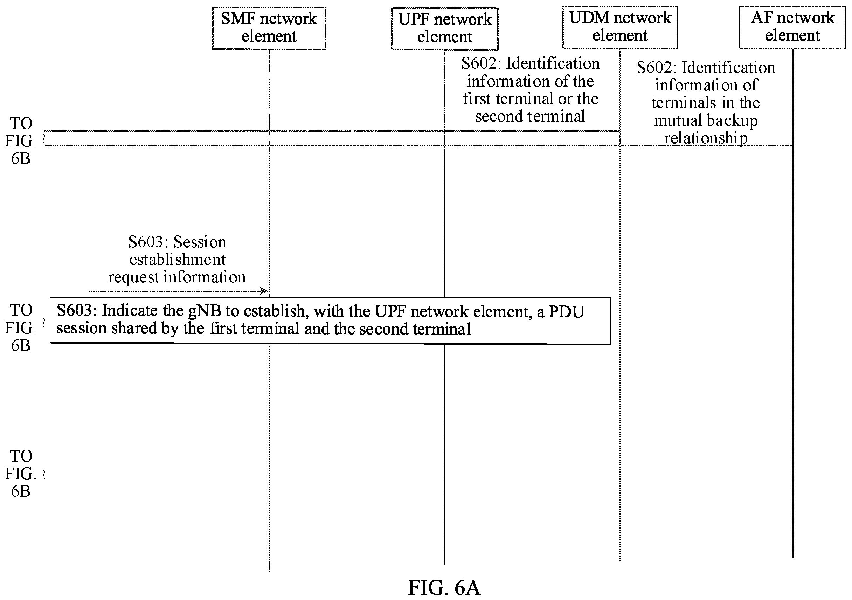

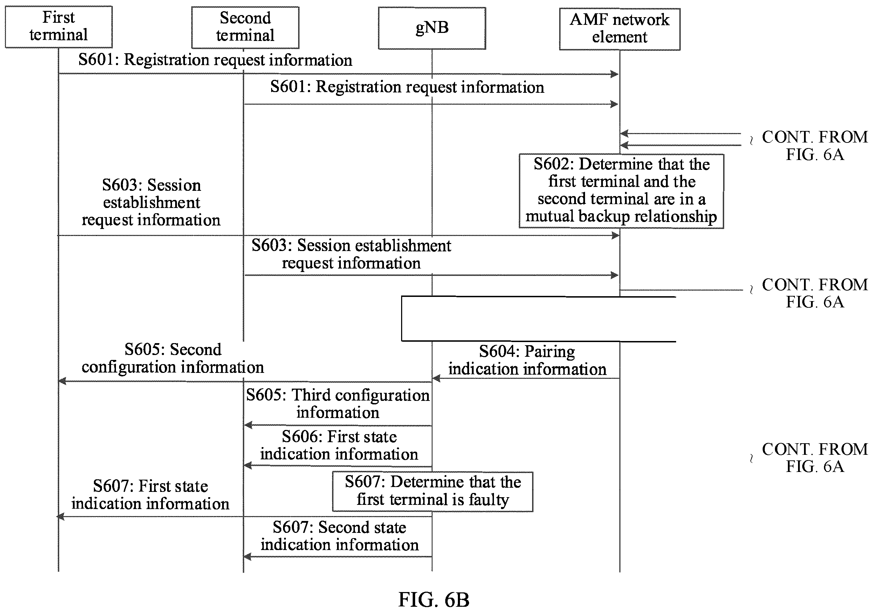

The following describes the embodiments shown in FIG. 2 to FIG. 4 in detail with reference to an embodiment of FIG. 6A and FIG. 6B.

In some other embodiments, an example in which the wireless communication system shown in FIG. 2 or FIG. 3 is used in the 5G wireless communication system shown in FIG. 4 is used. FIG. 6A and FIG. 6B show another method for performing data transmission by two terminal devices according to an embodiment of this application. A procedure of the method includes the following steps.

S601: A first terminal and a second terminal send registration request information to an AMF network element. Correspondingly, the AMF network element receives the registration request information from the first terminal and the second terminal. The registration request information is used to request to connect the terminal to a core network.

S602: The AMF network element determines that the first terminal and the second terminal are in a mutual backup relationship.

S603: The first terminal or the second terminal sends session establishment request information to the AMF network element. Correspondingly, the AMF network element receives the session establishment request information from the first terminal or the second terminal, and sends the session establishment request information to an SMF network element. The session establishment request information is used to request the SMF network element to establish a PDU session shared by the first terminal and the second terminal.

S604: The AMF network element sends pairing indication information to a gNB. Correspondingly, the gNB receives the pairing indication information from the AMF network element. The pairing indication information indicates that the first terminal and the second terminal are in the mutual backup relationship.

Steps S601 to S604 are the same as steps S501 to S504 in the embodiment shown in FIG. 5A and FIG. 5B. For related descriptions, refer to the embodiment shown in FIG. 5A and FIG. 5B. Details are not described herein again.

S605: When determining, based on the pairing indication information, that the first terminal is a primary terminal and the second terminal is a secondary terminal, the gNB sends second configuration information to the first terminal, and sends third configuration information to the second terminal. Correspondingly, the first terminal receives the second configuration information from the gNB, and the second terminal receives the third configuration information from the gNB. The second configuration information carries an RNTI, a security key, or a time-frequency resource of the first terminal, and the third configuration information carries an RNTI, a security key, or a time-frequency resource of the second terminal.

In some embodiments, after receiving, from the AMF network element, the pairing indication information indicating that the first terminal and the second terminal are in the mutual backup relationship, the gNB may determine the primary terminal and the secondary terminal in the terminals in the mutual backup relationship. When determining that the first terminal is the primary terminal and the second terminal is the secondary terminal, the gNB may send the second configuration information to the first terminal, and send the third configuration information to the second terminal. The second configuration information carries the RNTI, the security key, or the time-frequency resource of the first terminal, and the third configuration information carries the RNTI, the security key, or the time-frequency resource of the second terminal. In this way, the first terminal and the second terminal can normally perform data transmission, and further, the gNB can send downlink data to the first terminal and send the downlink data to the second terminal when the first terminal is faulty, so that the first terminal serving as the primary terminal and the second terminal serving as the secondary terminal can jointly perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

S606: The gNB sends first state indication information to the second terminal. Correspondingly, the second terminal receives the first state indication information from the gNB. The first state indication information indicates the terminal to enter a non-working state, and the non-working state is a state in which the terminal does not perform data transmission, or a state in which the terminal does not perform service data transmission but performs signaling transmission and transmits a MAC CE.

In some embodiments, after sending the second configuration information to the first terminal, and sending the third configuration information to the second terminal, the gNB may send, to the second terminal, the first state indication information indicating the terminal to enter the non-working state. The non-working state is a state in which the terminal does not perform data transmission, or a state in which the terminal does not perform service data transmission but performs signaling transmission and transmits a MAC CE. The first state indication information may be included in DCI or a MAC CE, or may be included in an RRC message. This is not specifically limited in this embodiment of this application.

In this embodiment of this application, the gNB may send, to the second terminal, the first state indication information indicating the terminal to enter the non-working state, so that the first terminal can normally perform data transmission, and the second terminal may not perform data transmission, or the second terminal does not perform service data transmission but performs signaling transmission and transmits a MAC CE. Further, the gNB can be enabled to send downlink data to the second terminal when the first terminal is faulty. Therefore, the first terminal serving as the primary terminal and the second terminal serving as the secondary terminal can jointly perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

S607: The gNB determines whether the first terminal is faulty. If yes, the gNB sends the first state indication information to the first terminal, and sends second state indication information to the second terminal. Correspondingly, the first terminal receives the first state indication information from the gNB, and the second terminal receives the second state indication information from the gNB. The second state indication information indicates the terminal to enter a working state, and the working state is a state in which the terminal sends uplink data and receives downlink data.

In some embodiments, after sending, to the second terminal, the first state indication information indicating the terminal to enter the non-working state, the gNB may determine whether the first terminal is faulty. If yes, the gNB sends the first state indication information to the first terminal, and sends, to the second terminal, the second state indication information indicating the terminal to enter the working state. The working state is a state in which the terminal sends uplink data and receives downlink data. The second state indication information may be sent by using DCI or a MAC CE, or may be sent by using an RRC message, for example, an RRC reconfiguration message. This is not specifically limited in this embodiment of this application.

It should be noted that, after sending, to the second terminal, the first state indication information indicating the terminal to enter the non-working state, the gNB may also send the first state indication information to the first terminal when determining that a radio link of the first terminal is faulty or that the radio link of the first terminal is poor, and send, to the second terminal, the second state indication information indicating the terminal to enter the working state. This is not specifically limited in this embodiment of this application.

For example, the gNB may obtain fault detection information of the first terminal. If the gNB does not obtain the fault detection information within a preset time period, the gNB determines that the first terminal is faulty or the radio link of the first terminal is faulty and the first terminal needs to be taken over by the second terminal. If the gNB obtains the fault detection information within a preset time period, the gNB determines, based on the fault detection information of the first terminal, whether the first terminal is faulty. The fault detection information may carry at least one of an uplink reference signal, feedback NACK information (or no received ACK information), uplink data, and fault indication information of the first terminal. The fault indication information indicates whether the first terminal is faulty. Specifically, the second terminal may determine, based on a heartbeat packet between the first terminal and the second terminal or feedback NACK information of the gNB, whether the first terminal is faulty, and send the fault indication information to the gNB. This is not specifically limited in this embodiment of this application. If the fault detection information carries the uplink reference signal of the first terminal, the gNB may perform uplink measurement based on the uplink reference signal of the first terminal. If a measurement value is less than a preset threshold for a period of time, it may be determined that the first terminal is faulty or the radio link of the first terminal is faulty. If the fault detection information carries the feedback information of the first terminal, and if a base station does not receive, within a preset time period, the feedback information of the first terminal for the downlink data, it may be determined that the first terminal is faulty or that the radio link of the first terminal is faulty.

In this embodiment of this application, when determining that the first terminal is faulty, the gNB sends, to the first terminal, the first state indication information indicating the terminal to enter the non-working state, and sends, to the second terminal, the second state indication information indicating the terminal to enter the working state. In other words, the gNB may send downlink data to the second terminal when the first terminal is faulty, so that the second terminal serving as the secondary terminal can replace the first terminal serving as the primary terminal to perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

In this embodiment of this application, after determining that the first terminal and the second terminal are in the mutual backup relationship, the AMF network element may send, to the gNB, the pairing indication information indicating that the first terminal and the second terminal are in the mutual backup relationship, so that when determining, based on the pairing indication information, that the first terminal is the primary terminal and the second terminal is the secondary terminal, the gNB can send downlink data to the first terminal and send the downlink data to the second terminal when the first terminal is faulty. Therefore, the first terminal serving as the primary terminal and the second terminal serving as the secondary terminal can jointly perform data transmission with the gNB, and only a spectrum resource is occupied or a small quantity of spectrum resources are occupied. This avoids a case in which data transmission cannot be performed when the primary terminal device is faulty, minimizes impact of a fault of the terminal device on service continuity of the terminal device, improves reliability of the terminal device, and consumes a small quantity of spectrum resources, to help alleviate a strain on spectrum resources.

It should be understood that, in embodiments of this application, each core network device and a base station may perform some or all of steps in embodiments of this application. The steps are only examples. In embodiments of this application, other steps or variations of various steps may further be performed. In addition, the steps may be performed in a sequence different from a sequence presented in embodiments of this application, and not all the steps in embodiments of this application need to be performed.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The foregoing mainly describes the solutions provided in embodiments of this application from a perspective of interaction between network elements and interaction between each core network device and the base station. It should be understood that, to implement the foregoing functions, the first core network device or the base station includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first core network device or the base station may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

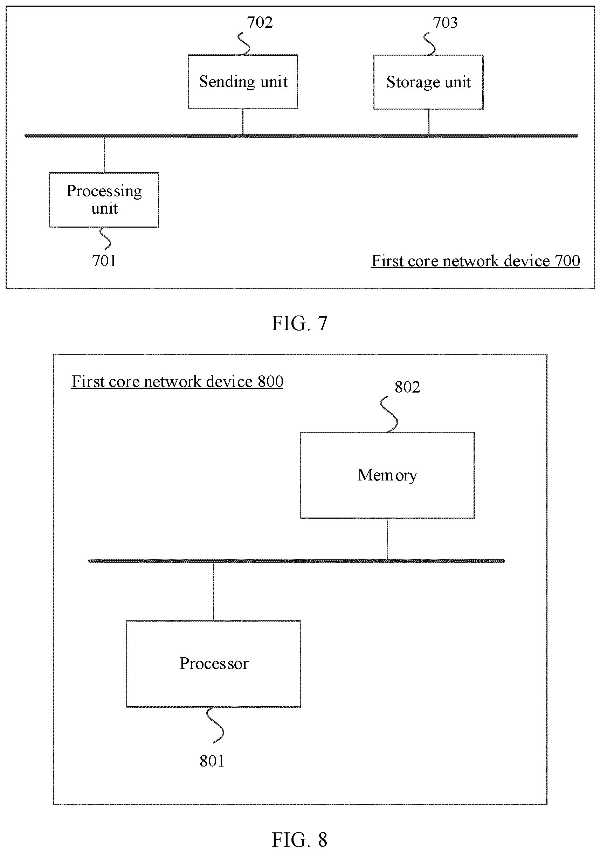

When an integrated unit (module) is used, FIG. 7 is a schematic diagram of a structure of a first core network device to which an embodiment of this application is applicable. As shown in FIG. 7, the first core network device 700 may include: a processing unit 701 and a sending unit 702.

The processing unit 701 is configured to control and manage an action of the first core network device 700 and support communication between the first core network device 700 and another network entity. For example, the processing unit 701 is configured to support the first core network device 700 in performing processes S501, S502, and S504 in FIG. 5A and FIG. 5B, and/or another process of the technology described in this specification. The sending unit 702 is configured to support the first core network device 700 in communicating with another network entity, for example, communicating with the first core network device and/or the base station shown in FIG. 5A and FIG. 5B.

Optionally, the first core network device 700 may further include a storage unit 703, configured to store program code and/or data of the first core network device 700. Specifically, reference may be made to the following descriptions:
The processing unit 701 is configured to determine that a first terminal and a second terminal are in a mutual backup relationship.

The sending unit 702 is configured to send pairing indication information to the base station, where the pairing indication information indicates that the first terminal and the second terminal are in the mutual backup relationship, so that when determining, based on the pairing indication information, that the first terminal is a primary terminal and the second terminal is a secondary terminal, the base station sends one copy of downlink data to the first terminal and the second terminal, or sends downlink data to the first terminal and sends the downlink data to the second terminal when the first terminal is faulty.

In a possible design, the processing unit 701 may be specifically configured to: receive registration request messages sent by the first terminal and the second terminal, where the registration request messages are used to request to connect the terminal to a core network; and after receiving the registration request information sent by the first terminal or the second terminal, obtain identification information of the second terminal or the first terminal from a second core network device, and determine, based on the identification information of the second terminal or the first terminal, that the first terminal and the second terminal are in the mutual backup relationship; after receiving the registration request information sent by the first terminal or the second terminal, obtain identification information of the second terminal or the first terminal from the registration request information sent by the first terminal or the second terminal, and determine, based on the identification information of the second terminal or the second terminal, that the first terminal and the second terminal are in the mutual backup relationship; or after receiving the registration request information sent by the first terminal or the second terminal, obtain, from an application function AF network element, identification information of terminals in the mutual backup relationship, and determine, based on the identification information of the terminals in the mutual backup relationship, that the first terminal and the second terminal are in the mutual backup relationship.

In a possible design, the processing unit 701 may be further configured to receive session establishment request information sent by the first terminal or the second terminal, and send the session establishment request information to a third core network device, where the session establishment request information is used to request the base station to establish, with a fourth core network device, a protocol data unit PDU session shared by the first terminal and the second terminal.

In a possible design, the sending unit 702 may be further configured to send association indication information to a peer application layer of the terminal, where the association indication information indicates the peer application layer to send downlink data to the first terminal and the second terminal when the peer application layer receives uplink data sent by the first terminal or the second terminal, and the association indication information carries internet protocol IP addresses of the first terminal and the second terminal or IP addresses of the first terminal and the second terminal and an IP address of the peer application layer

It should be understood that operations and/or functions of the modules in the first core network device 700 are separately used to implement corresponding procedures of the methods for performing data transmission by two terminal devices shown in FIG. 5A and FIG. 5B and FIG. 6A and FIG. 6B. For brevity, details are not described herein again.

When an integrated unit (module) is used, FIG. 8 is a schematic diagram of a structure of another first core network device to which an embodiment of this application is applicable. As shown in FIG. 8, the first core network 800 may include at least one processor 801 and a memory 802. The memory 802 stores one or more computer programs, for example, stores one or more computer programs necessary for the first core network 800. The processor 801 is configured to support the first core network 800 in implementing the foregoing method for performing data transmission by two terminal devices. For example, when one or more computer programs stored in the memory 802 are executed by the at least one processor 801, the first core network 800 may implement any one of the embodiments of the method for performing data transmission by two terminal devices shown in FIG. 5A and FIG. 5B and FIG. 6A and FIG. 6B, and/or is configured to implement another embodiment described in this specification.

Based on a same concept as the foregoing method embodiments, an embodiment of this application further provides a first core network device. The first core network device includes a module/unit for performing the method embodiments of the foregoing method for performing data transmission by two terminal devices or any one of the possible implementations of the method embodiments. These modules/units may be implemented by hardware, or may be implemented by hardware by executing corresponding software.

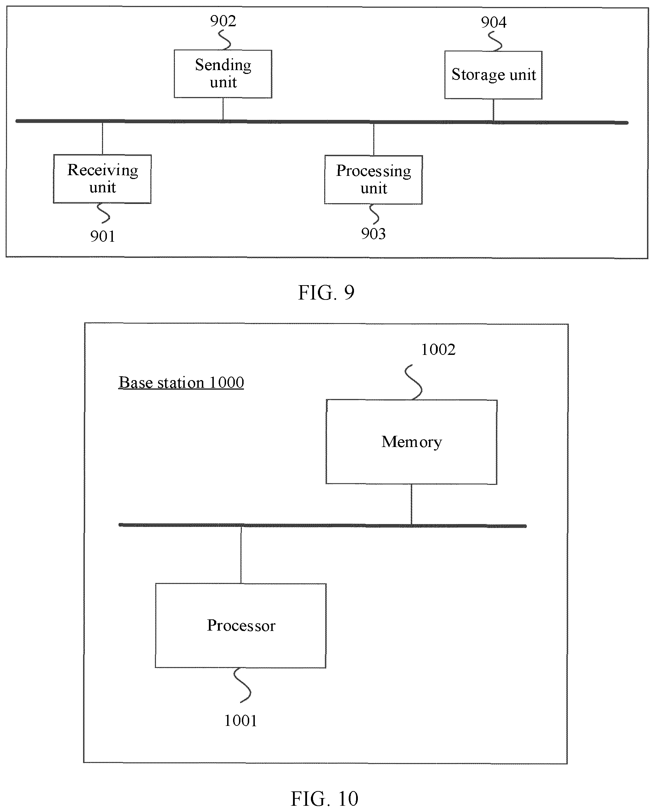

When an integrated unit (module) is used, FIG. 9 is a schematic diagram of a structure of a base station to which an embodiment of this application is applicable. As shown in FIG. 9, the base station 900 may include: a receiving unit 901, a sending unit 902, and a processing unit 903.

The processing unit 903 is configured to control and manage an action of the base station 900. For example, the processing unit 903 is configured to support the base station 900 in performing the process S507 in FIG. 5A and FIG. 5B, and/or another process of the technology described in this specification. The receiving unit 901 and the sending unit 902 are configured to support the base station 900 in communicating with another network entity, for example, communicating with a first core network device and/or an application layer shown in FIG. 5A and FIG. 5B.

Optionally, the base station 900 may further include a storage unit 904, configured to store program code and/or data of the base station 900. Specifically, reference may be made to the following descriptions:
The receiving unit 901 is configured to receive pairing indication information sent by a first core network device, where the pairing indication information indicates that a first terminal and a second terminal are in a mutual backup relationship.

The sending unit 902 is configured to, when determining, based on the pairing indication information, that the first terminal is a primary terminal and the second terminal is a secondary terminal, send one copy of downlink data to the first terminal and the second terminal, or send downlink data to the first terminal and send the downlink data to the second terminal when the first terminal is faulty.

In a possible design, the receiving unit 901 may be further configured to: receive session establishment indication information sent by a third core network device, where the session establishment indication information indicates the base station to establish, with a fourth core network device, a protocol data unit PDU session shared by the first terminal and the second terminal; and establish, with the fourth core network device, based on the session establishment indication information, the PDU session shared by the first terminal and the second terminal.

In a possible design, when sending the copy of downlink data to the first terminal and the second terminal, the sending unit 902 is specifically configured to: send the first configuration information to the first terminal, and send a part or all of the first configuration information to the second terminal, where the first configuration information carries a group radio network temporary identifier RNTI or a security key shared by the first terminal and the second terminal.

Specific content of the security key is not limited herein in this embodiment of this application. The security key may be any one or more of the following: a key generated by the base station based on an identifier of the first terminal and an identifier of the second terminal; a key generated by the base station based on a random number; a key generated by the base station for the first terminal and the second terminal; or a key that is received by the base station and that is generated by the core network device based on an identifier of the first terminal and an identifier of the second terminal.

In a possible design, the sending unit 902 may be further configured to send first state indication information to the second terminal, where the first state indication information indicates the terminal to enter a non-working state, and the non-working state is a state in which the terminal does not send uplink data but receives downlink data, a state in which the terminal does not perform data transmission, or a state in which the terminal does not perform service data transmission but performs signaling transmission.

In a possible design, the processing unit 903 may be configured to determine whether the first terminal is faulty, and if yes, the processing unit 903 sends the first state indication information to the first terminal, and sends second state indication information to the second terminal, where the second state indication information indicates the terminal to enter a working state, and the working state is a state in which the terminal sends uplink data and receives downlink data.

In a possible design, when determining whether the first terminal is faulty, the processing unit 903 is specifically configured to: obtain fault detection information of the first terminal, where the fault detection information carries at least one of an uplink reference signal, feedback NACK information, uplink data, and fault indication information of the first terminal, and the fault indication information indicates whether the first terminal is faulty. If the fault detection information is not obtained within a preset time period, the processing unit 903 determines that the first terminal is faulty. If the fault detection information is obtained within a preset time period, the processing unit 903 determines, based on the fault detection information, whether the first terminal is faulty.

It should be understood that operations and/or functions of the modules in the base station 900 are separately used to implement corresponding procedures of the methods for performing data transmission by two terminal devices shown in FIG. 5A and FIG. 5B and FIG. 6A and FIG. 6B. For brevity, details are not described herein again.

When an integrated unit (module) is used, FIG. 10 is a schematic diagram of a structure of another base station to which an embodiment of this application is applicable. As shown in FIG. 10, the base station 1000 may include at least one processor 1001 and a memory 1002. The memory 1002 stores one or more computer programs, for example, stores one or more computer programs necessary for the base station 1000. The processor 1001 is configured to support the base station 1000 in implementing the foregoing method for performing data transmission by two terminal devices. For example, when one or more computer programs stored in the memory 1002 are executed by the at least one processor 801, the base station 1000 may implement any one of the embodiments of the method for performing data transmission by two terminal devices shown in FIG. 5A and FIG. 5B and FIG. 6A and FIG. 6B, and/or is configured to implement another embodiment described in this specification.

Based on a same concept as the foregoing method embodiments, an embodiment of this application further provides a base station. The base station includes a module/unit for performing the method embodiments of the foregoing method for performing data transmission by two terminal devices or any one of the possible implementations of the method embodiments. These modules/units may be implemented by hardware, or may be implemented by hardware by executing corresponding software.

Based on a same concept as the foregoing method embodiments, an embodiment of this application further provides a computer-readable storage medium. The computer-readable storage medium stores a computer program. When the computer program is run on a computer, the computer is enabled to perform the foregoing method embodiments of the method for performing data transmission by two terminal devices or any one of the possible implementations of the method embodiments, for example, perform any step of the embodiments of the method for performing data transmission by two terminal devices shown in FIG. 5A and FIG. 5B and FIG. 6A and FIG. 6B, and/or perform another process of the technology described in this specification.

Based on a same concept as the foregoing method embodiments, an embodiment of this application further provides a program product. When the program product is run on a computer, the computer is enabled to perform the foregoing method embodiments of the method for performing data transmission by two terminal devices or any one of the possible implementations of the method embodiments, for example, perform any step of the embodiments of the method for performing data transmission by two terminal devices shown in FIG. 5A and FIG. 5B and FIG. 6A and FIG. 6B, and/or perform another process of the technology described in this specification.

Based on a same concept as the foregoing method embodiments, an embodiment of this application further provides a chip. The chip may be coupled to a memory in a first core network device or a base station, and is configured to invoke a computer program stored in the memory and perform the foregoing method embodiments of the method for performing data transmission by two terminal devices and any one of the possible implementations of the method embodiments, for example, perform any step of the embodiments of the method for performing data transmission by two terminal devices shown in FIG. 5A and FIG. 5B and FIG. 6A and FIG. 6B, and/or perform another process of the technology described in this specification.

It should be understood that a processor or a processing unit (for example, the processor or the processing unit shown in FIG. 7 to FIG. 10) in embodiments of this application may be an integrated circuit chip and has a signal processing capability. In an implementation process, steps in the foregoing method embodiments of the method for performing data transmission by two terminal devices may be implemented by using an integrated logical circuit of hardware in the processor, or by using instructions in a form of software. The processor may be a general-purpose central processing unit (central processing unit, CPU), a general-purpose processor, digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof; or may be a combination implementing a computing function, for example, a combination of one or more microprocessors or a combination of a DSP and a microprocessor. The general-purpose processor may be a microprocessor, or the processor may be any conventional processor or the like.

It should be understood that a memory or a storage unit in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and method described in this application is intended to include but is not limited to these memories and any other memories of a proper type.

Various illustrative logic units and circuits described in embodiments of this application may implement or operate the described functions by using a general-purpose processor, a digital signal processor, an application-specific integrated circuit (application-specific integrated circuit, ASIC), a field programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an EPROM, an EEPROM, a register, a hard disk, a removable disk, a CD-ROM, or any other storage medium in the art. For example, the storage medium may connect to a processor, so that the processor may read information from the storage medium and write information to the storage medium. Optionally, the storage medium may be integrated into a processor. The processor and the storage medium may be disposed in an ASIC. The ASIC may be disposed in a communication device (such as a first core network device or a base station), for example, may be disposed in different components of the communication device.

All or some of the foregoing embodiments may be implemented through software, hardware, firmware, or any combination thereof. When software is used to implement the embodiments, all or some of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk drive, or a magnetic tape; or may be an optical medium, for example, a DVD; or may be a semiconductor medium, for example, a solid-state drive (solid-state drive, SSD).

Embodiments of this application are described with reference to the flowcharts and/or block diagrams of the methods, the apparatuses, and the computer program product according to embodiments. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A method for performing data transmission by two terminal devices, comprising:
determining, by a first core network device, that a first terminal and a second terminal are in a mutual backup relationship; and
sending, by the first core network device, pairing indication information to a base station, wherein the pairing indication information indicates that the first terminal and the second terminal are in the mutual backup relationship, so that when determining, based on the pairing indication information, that the first terminal is a primary terminal and the second terminal is a secondary terminal, the base station sends one copy of downlink data to the first terminal and the second terminal, or sends downlink data to the first terminal and sends the downlink data to the second terminal when the first terminal is faulty.

2. The method according to claim 1, wherein the determining, by a first core network device, that a first terminal and a second terminal are in a mutual backup relationship comprises:
receiving, by the first core network device, registration request messages sent by the first terminal and the second terminal, wherein the registration request messages are used to request to connect the terminal to a core network; and
after receiving the registration request information sent by the first terminal or the second terminal, obtaining, by the first core network device, identification information of the second terminal or the first terminal from a second core network device, and determining, based on the identification information of the second terminal or the first terminal, that the first terminal and the second terminal are in the mutual backup relationship;
after receiving the registration request information sent by the first terminal or the second terminal, obtaining, by the first core network device, identification information of the second terminal or the first terminal from the registration request information sent by the first terminal or the second terminal, and determining, based on the identification information of the second terminal or the second terminal, that the first terminal and the second terminal are in the mutual backup relationship; or
after receiving the registration request information sent by the first terminal or the second terminal, obtaining, by the first core network device from an application function AF network element, identification information of terminals in the mutual backup relationship, and determining, based on the identification information of the terminals in the mutual backup relationship, that the first terminal and the second terminal are in the mutual backup relationship.

3. The method according to claim 2, wherein the method further comprises:
after receiving the registration request information sent by the first terminal or the second terminal, receiving, by the first core network device, session establishment request information sent by the first terminal or the second terminal, and sending the session establishment request information to a third core network device, wherein the session establishment request information is used to request the base station to establish, with a fourth core network device, a protocol data unit PDU session shared by the first terminal and the second terminal.

4. A method for performing data transmission by two terminal devices, comprising:
receiving, by a base station, pairing indication information sent by a first core network device, wherein the pairing indication information indicates that a first terminal and a second terminal are in a mutual backup relationship; and
when determining, based on the pairing indication information, that the first terminal is a primary terminal and the second terminal is a secondary terminal, sending, by the base station, one copy of downlink data to the first terminal and the second terminal, or sending downlink data to the first terminal and sending the downlink data to the second terminal when the first terminal is faulty.

5. The method according to claim 4, wherein the method further comprises:
receiving, by the base station, session establishment indication information sent by a third core network device, wherein the session establishment indication information indicates the base station to establish, with a fourth core network device, a protocol data unit PDU session shared by the first terminal and the second terminal; and
establishing, by the base station with the fourth core network device based on the session establishment indication information, the PDU session shared by the first terminal and the second terminal.

6. The method according to claim 4, wherein the sending, by the base station, one copy of downlink data to the first terminal and the second terminal comprises:
sending, by the base station, first configuration information to the first terminal, and sending a part or all of the first configuration information to the second terminal, wherein the first configuration information carries a group radio network temporary identifier RNTI or a security key shared by the first terminal and the second terminal.

7. The method according to claim 6, wherein the security key is any one or more of the following:
a key generated by the base station based on an identifier of the first terminal and an identifier of the second terminal;
a key generated by the base station based on a random number;
a key generated by the base station for the first terminal and the second terminal; or
a key that is received by the base station and that is generated by the core network device based on an identifier of the first terminal and an identifier of the second terminal.

8. The method according to claim 6, wherein the method further comprises:
sending, by the base station, first state indication information to the second terminal, wherein the first state indication information indicates the terminal to enter a non-working state, and the non-working state is a state in which the terminal does not send uplink data but receives downlink data, a state in which the terminal does not perform data transmission, or a state in which the terminal does not perform service data transmission but performs signaling transmission.

9. The method according to claim 8, wherein the method further comprises:
determining, by the base station, whether the first terminal is faulty, and if the first terminal is faulty, sending the first state indication information to the first terminal, and sending second state indication information to the second terminal, wherein the second state indication information indicates the terminal to enter a working state, and the working state is a state in which the terminal sends uplink data and receives downlink data.

10. The method according to claim 9, wherein the determining, by the base station, whether the first terminal is faulty comprises:
obtaining, by the base station, fault detection information of the first terminal, wherein the fault detection information carries at least one of an uplink reference signal, feedback NACK information, uplink data, and fault indication information of the first terminal, and the fault indication information indicates whether the first terminal is faulty; and
if the fault detection information is not obtained within a preset time period, determining that the first terminal is faulty; or
if the fault detection information is obtained within a preset time period, determining, based on the fault detection information, whether the first terminal is faulty.

11. A first core network device, comprising:
a processing unit, configured to determine that a first terminal and a second terminal are in a mutual backup relationship; and
a sending unit, configured to send pairing indication information to a base station, wherein the pairing indication information indicates that the first terminal and the second terminal are in the mutual backup relationship, so that when determining, based on the pairing indication information, that the first terminal is a primary terminal and the second terminal is a secondary terminal, the base station sends one copy of downlink data to the first terminal and the second terminal, or sends downlink data to the first terminal and sends the downlink data to the second terminal when the first terminal is faulty.

12. The first core network device according to claim 11, wherein the processing unit is specifically configured to:
receive registration request messages sent by the first terminal and the second terminal, wherein the registration request messages are used to request to connect the terminal to a core network;
after receiving the registration request information sent by the first terminal or the second terminal, obtain identification information of the second terminal or the first terminal from a second core network device, and determine, based on the identification information of the second terminal or the first terminal, that the first terminal and the second terminal are in the mutual backup relationship;
after receiving the registration request information sent by the first terminal or the second terminal, obtain identification information of the second terminal or the first terminal from the registration request information sent by the first terminal or the second terminal, and determine, based on the identification information of the second terminal or the second terminal, that the first terminal and the second terminal are in the mutual backup relationship; or
after receiving the registration request information sent by the first terminal or the second terminal, obtain, from an application function AF network element, identification information of terminals in the mutual backup relationship, and determine, based on the identification information of the terminals in the mutual backup relationship, that the first terminal and the second terminal are in the mutual backup relationship.

13. The first core network device according to claim 12, wherein the processing unit is further configured to:
receive session establishment request information sent by the first terminal or the second terminal, and send the session establishment request information to a third core network device, wherein the session establishment request information is used to request the base station to establish, with a fourth core network device, a protocol data unit PDU session shared by the first terminal and the second terminal.

14. A base station, comprising:
a receiving unit, configured to receive pairing indication information sent by a first core network device, wherein the pairing indication information indicates that a first terminal and a second terminal are in a mutual backup relationship; and
a sending unit, configured to, when determining, based on the pairing indication information, that the first terminal is a primary terminal and the second terminal is a secondary terminal, send one copy of downlink data to the first terminal and the second terminal, or send downlink data to the first terminal and send the downlink data to the second terminal when the first terminal is faulty.

15. The base station according to claim 14, wherein the receiving unit is further configured to:
receive session establishment indication information sent by a third core network device, wherein the session establishment indication information indicates the base station to establish, with a fourth core network device, a protocol data unit PDU session shared by the first terminal and the second terminal; and
establish, with the fourth core network device based on the session establishment indication information, the PDU session shared by the first terminal and the second terminal.

16. The base station according to claim 14, wherein when sending the copy of downlink data to the first terminal and the second terminal, the sending unit is specifically configured to:
send first configuration information to the first terminal, and send a part or all of the first configuration information to the second terminal, wherein the first configuration information carries a group radio network temporary identifier RNTI or a security key shared by the first terminal and the second terminal.

17. The base station according to claim 16, wherein the security key is any one or more of the following:
a key generated by the base station based on an identifier of the first terminal and an identifier of the second terminal;
a key generated by the base station based on a random number;
a key generated by the base station for the first terminal and the second terminal; or
a key that is received by the base station and that is generated by the core network device based on an identifier of the first terminal and an identifier of the second terminal.

18. The base station according to claim 16, wherein the sending unit is further configured to:
send first state indication information to the second terminal, wherein the first state indication information indicates the terminal to enter a non-working state, and the non-working state is a state in which the terminal does not send uplink data but receives downlink data, a state in which the terminal does not perform data transmission, or a state in which the terminal does not perform service data transmission but performs signaling transmission.

19. The base station according to claim 18, wherein the base station further comprises a processing unit, wherein
the processing unit is configured to determine whether the first terminal is faulty, and if the first terminal is faulty, the processing unit sends the first state indication information to the first terminal, and sends second state indication information to the second terminal, wherein the second state indication information indicates the terminal to enter a working state, and the working state is a state in which the terminal sends uplink data and receives downlink data.

20. The base station according to claim 19, wherein when determining whether the first terminal is faulty, the processing unit is specifically configured to:
obtain fault detection information of the first terminal, wherein the fault detection information carries at least one of an uplink reference signal, feedback NACK information, uplink data, and fault indication information of the first terminal, and the fault indication information indicates whether the first terminal is faulty; and
if the fault detection information is not obtained within a preset time period, determine that the first terminal is faulty; or
if the fault detection information is obtained within a preset time period, determine, based on the fault detection information, whether the first terminal is faulty.

21. An apparatus for performing data transmission by two terminal devices, comprising at least one processor and a memory, wherein
the memory stores one or more computer programs; and
when the one or more computer programs stored in the memory are executed by the at least one processor, the apparatus is enabled to perform the method according to any one of claims 1 to 3, or the apparatus is enabled to perform the method according to any one of claims 4 to 10.

22. A computer storage medium, wherein the computer-readable storage medium comprises a computer program; and when the computer program is run on a computer, the computer is enabled to perform the method according to any one of claims 1 to 3, or the computer is enabled to perform the method according to any one of claims 4 to 10.

23. A system for performing data transmission by two terminal devices, wherein the system comprises the first core network device according to any one of claims 11 to 13 and the base station according to any one of claims 14 to 20.
